# EUROPEAN PATENT APPLICATION

(11) **EP 4 635 773 A1**
(43) Date of publication of application: **22.10.2025**
(21) Application number: 24170445.1
(22) Date of filing: 16.04.2024
(51) Int. Cl.: B60L 1/00, B60W 20/00, B60K 6/52, B60K 25/06

(54) **CONTROL ARRANGEMENT AND METHOD FOR CONTROLLING A VEHICLE**

(71) Applicant: Scania CV AB, 151 87 Södertälje (SE)
(72) Inventor: ALBIOL, Pablo, 117 71 Stockholm (SE); BERGLUND, Martin, 619 73 Vagnhärad (SE); SUNDÉN, Fredrik, 125 33 Älvsjö (SE); JOHANSSON, Bengt, 151 44 Södertälje (SE)
(74) Representative: Scania CV AB

(57) **Abstract**

Control arrangement (100) and method for controlling a vehicle (1), said vehicle (1) comprising at least two mechanically separated powertrains including a first powertrain (20) and one or more second powertrains (30). The vehicle (1) further comprises a power take-off (11, 12, 13) configured to be powered by the first powertrain (20). The method comprises, while the vehicle is in motion and power unit(s) of the first powertrain are disconnected from their corresponding drive wheel(s), controlling (S108) the first powertrain (20) to power the power take-off (11, 12, 13) and controlling (S104) the one or more second powertrains (30) to meet a total motive force demand of the vehicle (1).

## Description

### TECHNICAL FIELD

The present disclosure relates in general to a method for controlling a vehicle. The present disclosure further relates in general to a control arrangement configured to control a vehicle.

Furthermore, the present disclosure relates in general to a computer program and a computer-readable medium. The present disclosure also relates to a vehicle.

### BACKGROUND

Vehicle powertrains usually comprises at least one power unit connected to drive wheels of the vehicle via various shafts and one or more transmission units to transform the output torque of the power unit to a greater torque on the drive wheels. In addition to propelling the vehicle, a vehicle powertrain may also be used to drive one or more auxiliary devices. Such auxiliary devices are herein also denominated auxiliary power consumers. Examples of auxiliary power consumers include pumps, cranes, mixers, compressors, or the like, but are not limited thereto. For the purpose of enabling powering such auxiliary power consumers, the vehicle may comprise one or more power take-offs connected to a powertrain of the vehicle and configured to transmit power from the vehicle powertrain to any auxiliary power consumer connected to the power take-off.

A power take-off may for example be connected to a lay shaft of a transmission unit. Thereby, the lay shaft may drive the auxiliary power consumer by virtue of rotational energy from the lay shaft being transmitted to the power take-off. A power take-off may also be connected to for example a main shaft of the transmission unit, e.g., via a cogwheel arrangement. A power take-off may alternatively be connected to the vehicle powertrain outside the transmission unit. For example, a power take-off may be arranged on a shaft of the power unit, or be connected to a flywheel of the power unit.

When an auxiliary power consumer is connected to a power take-off so as to be powered by the vehicle powertrain, it results in a load on power take-off and thus also on the vehicle powertrain. This load may affect the operation of the vehicle powertrain for the purpose of propelling the vehicle as it consumes energy from the vehicle powertrain. A vehicle manufacturer is typically not aware of which auxiliary power consumer(s) a customer, a body builder or a user of the vehicle intends to connect to the vehicle powertrain, and in particular not when such auxiliary power consumers, if connected, may consume energy from the powertrain. It may therefore be difficult to develop suitable control strategies for the powertrain since the power take-off load is usually not known.

Furthermore, a mechanical power take-off can typically neither be connected to, or disconnected from, the powertrain, nor be freely operated, on a moving vehicle since it may cause disturbances or even interruption in the propulsion of the vehicle. This is particularly true in case of the power take-off being connected to a conventional automated manual transmission. The ability to drive the vehicle so as to meet the needs of the driving situation typically has to be prioritized, which means that the power flow to the power take-off may be interrupted or disturbed.

It has previously been proposed to solve the above mentioned problem by specific (more advanced) configurations of powertrains. One such example is disclosed in WO 2021/096407 A1. It would however be desirable to find a solution that is not limited to such configurations of powertrains and that may be used also in case the power take-off is connected to, e.g., a conventional automated manual transmission or the like.

### SUMMARY

The object of the present invention is to improve the ability to use a power take-off of a vehicle during driving.

The object is achieved by the subject-matter of the appended independent claim(s).

The present disclosure relates to a method, performed by a control arrangement, for controlling a vehicle. Said vehicle comprises at least two mechanically separated powertrains including a first powertrain and one or more second powertrains. The first powertrain comprises one or more first power units configured to provide force to one or more first drive wheels of the vehicle. Furthermore, each second powertrain comprises one or more second power units configured to provide force to one or more second drive wheels of the vehicle. The vehicle further comprises a power take-off configured to be powered by the first powertrain. The method comprises, while the vehicle is in motion and the one or more first power units are disconnected from the one or more first drive wheels, the steps of: (a) controlling the first powertrain to power the power take-off, and (b) controlling the one or more second powertrains to meet a total motive force demand of the vehicle.

The herein described method allows for powering of a power take-off without said powering causing disturbances of, or interruption of, the total motive force provided to the vehicle and thus the ability to e.g., meet a desired travelling speed of the vehicle. This is enabled through utilization of the advantages provided by the vehicle comprising at least two mechanically separated powertrain. More specifically, a vehicle comprising at least two mechanically separated powertrains e.g., has the advantage of enabling distribution between the powertrains of the motive force provided by the powertrains of the vehicle to meet a total motive force demand of said vehicle. The herein described method utilizes this advantage for the purpose of enabling an independent power flow to a power take-off while still meeting the total motive force demand of the vehicle. More specifically, the first powertrain is allocated to powering the power take-off whereas the one or more second powertrains are controlled so as to meet the requirements of a certain current driving situation.

The allocation of the first powertrain to powering of the power take-off independently of how the vehicle is controlled for the purpose of meeting the requirements of a certain driving situation also has the advantage that a vehicle manufacturer can develop suitable control strategies for different driving scenarios of the vehicle despite not knowing which type of auxiliary power consumer that may be connected to the vehicle, when it is to be powered, or the power demand thereof.

Furthermore, the herein described method enables an independent and non-interrupted power flow to the power take-off. This is due to the one or more first power units of the first powertrain not being connected to the one or more first drive wheels, which in turn means that the first powertrain can be controlled independently of how the vehicle as a whole is controlled for the purpose of meeting a total force demand.

The present method also enables freely operating a power take-off irrespectively of how and where the power take-off is connected to the first powertrain. In other words, the herein described method is not dependent on e.g., a specific configuration of a transmission arrangement for enabling a non-interrupted and independent power flow to the power take-off.

The method may further comprise a step of, in response to a request for powering of the power take-off while the first powertrain provides motive force to the vehicle, redistributing the motive force provided by the first powertrain to be provided by the one or more second powertrains, and controlling the one or more second powertrains to meet a total motive force demand of the vehicle. The method may further comprise a step of, when no motive force is provided by the first powertrain, disconnecting the one or more first power units from the one or more first drive wheels. Moreover, the method may comprise a step of, when the one or more first power units are disconnected from the one or more first drive wheels, controlling a speed of the one or more first power units to allow connection of the power take-off to the first powertrain and thereafter connecting the power take-off to the first powertrain. Thereafter, the method may comprise a step of controlling the first powertrain to power the power take-off. This allows for commencing powering the power take-off, in response to a request therefore, without disturbing propulsion of the vehicle, despite the fact that said request has been generated while the first powertrain provides motive force to the vehicle. More specifically, there is no need for stopping or interrupting vehicle operation to allow connection of the power take-off and starting powering thereof.

The method may further comprise a step of, in response to a request for disconnection of the power take-off from the first powertrain while the vehicle is in motion, controlling a torque of the one or more first power units to allow disconnection of the power take-off from the first powertrain, and thereafter a step of disconnecting the power take-off from the first powertrain. Disconnecting the power take-off from the first powertrain, when there is no need for powering thereof, has the advantage of reducing the risk for damaging an auxiliary power consumer connected to the power take-off and may also reduce energy losses. The method may optionally, when the power take-off is disconnected from the first powertrain, further comprise a step of connecting at least one of the one or more first power units to the one or more drive wheels. This in turn e.g., allows the first powertrain to be controlled so as to provide force to the one or more first drive wheels, when desired. This prepares the vehicle to be controlled in accordance with a control strategy that may be more energy efficient, or achieve any other desired effect; e.g., as the total motive force provided to the vehicle may be more appropriately distributed between the different powertrains.

The method may further comprise a step of, when the power take-off is powered by the first powertrain and the one or more first power units are disconnected from the one or more drive wheels while the vehicle is in motion, controlling the first powertrain to connect at least one of the one or more first power units to the one or more first drive wheels while powering the power take-off. Said step may be followed by a step of controlling the first powertrain and the one or more second powertrains to achieve a targeted force distribution therebetween to meet a total motive force demand of the vehicle while still powering the power take-off using the first powertrain. This may for example enable improved traction since it allows for using not only the one or more second powertrains, but also the first powertrain, to provide motive force to the vehicle. Moreover, this could enable a more energy efficient control strategy for the vehicle in certain driving situations since it allows for allocating some of the motive force to be provided to the vehicle to the first powertrain despite the fact that it powers the power take-off. This could also in turn reduce the working load of the one or more second power units of the one or more second powertrains.

The method may further a step of, when a power demand of the power take-off is higher than a power deliverable to the power take-off by the first powertrain, controlling the first powertrain to connect at least one of the one or more first power units to the one or more first drive wheels, unless already connected, and thereafter increasing the motive power delivered by the one or more second powertrain to meet the total motive force demand of the vehicle and, through transfer of power to the first powertrain via the ground on which the vehicle travels, the power demand of the power take-off. This has the advantage of enabling meeting both the total motive force demand of the vehicle as well as the power demand of the power take-off, even in situations where the first powertrain alone is unable to meet the power demand of the power take-off (whatever the reason therefore may be).

The present disclosure further relates to a computer program comprising instructions which, when executed by a computer, cause the computer to carry out the method as described above.

The present disclosure further relates to a computer-readable medium comprising instructions which, when executed by a computer, cause the computer to carry out the method as described above.

The present disclosure further relates to a control arrangement configured to control a vehicle, said vehicle comprising at least two mechanically separated powertrains. The at least two mechanically separated powertrains includes a first powertrain comprising one or more first power units configured to provide force to one or more first drive wheels of the vehicle. The at least two mechanically separated powertrains further includes one or more second powertrains, each second powertrain comprising one or more second power units configured to provide force to one or more second drive wheels of the vehicle. The vehicle further comprises a power take-off configured to be powered by the first powertrain. The control arrangement is configured to, while the vehicle is in motion and the one or more first power units are disconnected from the one or more first drive wheels, control the first powertrain to power the power take-off and control the one or more second powertrains to meet a total motive force demand of the vehicle.

The control arrangement provides the same advantages as described above with regard to the corresponding method for controlling a vehicle.

The control arrangement may further be configured to, in response to a request for powering of the power take-off while the first powertrain provides motive force to the vehicle, redistribute the motive force provided by the first powertrain to be provided by the one or more second powertrains and controlling the one or more second powertrains to meet a total motive force demand of the vehicle. If so, the control arrangement may also be configured to, when no motive force is provided by the first powertrain, disconnect the one or more first power units from the one or more first drive wheels. Moreover, the control arrangement may be configured to, when the one or more first power units are disconnected from the one or more first drive wheels, control a speed of the one or more first power units to allow connection of the power take-off to the first powertrain and thereafter connect the power take-off to the first powertrain. The control arrangement may be configured to thereafter control the first powertrain to power the power take-off.

The control arrangement may further be configured to, in response to a request for disconnection of the power take-off from the first powertrain while the vehicle is in motion, control a torque of the one or more first power units to allow disconnection of the power take-off from the first powertrain and thereafter disconnect the power take-off from the first powertrain. The control arrangement may optionally further be configured to connect at least one of the one or more first power units to the one or more first drive wheels when the power take-off is disconnected from the first powertrain.

The control arrangement may further be configured to, when the power take-off is powered by the first powertrain and the one or more first power units are disconnected from the one or more drive wheels while the vehicle is in motion, control the first powertrain to connect at least one of the one or more first power units to the one or more first drive wheels while powering the power take-off. If so, the control arrangement may further be configured to thereafter control the first powertrain and the one or more second powertrains to achieve a targeted force distribution therebetween to meet a total motive force demand of the vehicle while powering the power take-off using the first powertrain.

The control arrangement may further be configured to, when a power demand of the power take-off is higher than a power deliverable to the power take-off by the first powertrain, control the first powertrain to connect at least one of the one or more first power units to the one or more first drive wheels, unless already connected. If so, the control arrangement may further be configured to thereafter increase the motive power delivered by the second powertrain to meet the total motive force demand of the vehicle as well as, through transfer of power to the first powertrain via the ground on which the vehicle travels, the power demand of the power take-off.

The present disclosure also relates to a vehicle comprising at least two mechanically separated powertrains. The at least two mechanically separated powertrains comprises a first powertrain and a second powertrain. The first powertrain comprises one or more first power units configured to provide force to one or more first drive wheels of the vehicle. The second powertrain comprises one or more second power units configured to provide force to one or more second drive wheels of the vehicle. The vehicle further comprises a power take-off configured to be powered by the first powertrain. Moreover, the vehicle comprises the control arrangement as described above.

The first powertrain and the second powertrain may be comprised in a common vehicle unit of the vehicle. Alternatively, the first powertrain may be comprised in a first vehicle unit of the vehicle, whereas the second powertrain is comprised in a second vehicle unit of the vehicle.

The vehicle may be a heavy vehicle, such as a truck or a bus, but is not limited thereto.

### BRIEF DESCRIPTION OF DRAWINGS

- Fig. 1: illustrates a side view of a first example of a vehicle,
- Fig. 2: illustrates a side view of a second example of a vehicle,
- Fig. 3: schematically illustrates an example of a powertrain of a vehicle,
- Fig. 4: schematically illustrates an exemplifying embodiment of a vehicle comprising a first powertrain and a second powertrain that are mechanically separated from each other,
- Fig. 5: represents a flowchart schematically illustrating a first exemplifying embodiment of the herein described method for controlling a vehicle,
- Fig. 6: represents a flowchart schematically illustrating a second exemplifying embodiment of the herein described method for controlling a vehicle, and
- Fig. 7: schematically illustrates an exemplifying embodiment of a device which may comprise, consist of, or be comprised in a control arrangement configured to perform the herein described method.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

A vehicle is in the present disclosure considered to mean any means that may be used for transporting people and/or cargo. A vehicle may consist of a single vehicle unit. Examples of a vehicle consisting of a single vehicle unit includes a car, a rigid truck, a tractor truck, a bus, a self-powered trailer, or a self-powered dolly, but are not limited thereto. Alternatively, a vehicle may constitute a vehicle combination comprising at least two vehicle units which are physically linked when travelling. A vehicle combination may be a vehicle comprising a tractor vehicle and at least one trailing vehicle. Examples of vehicle combinations include a semi-trailer truck, a rigid truck pulling a semitrailer using a dolly, or a vehicle train comprising a rigid truck and one or more trailers, but are not limited thereto.

A vehicle powertrain comprises at least one power unit (also known as a propulsion unit) and a driveline configured to transmit propulsion/braking force to one or more drive wheels of the vehicle, said one or more drive wheels also constituting constituent components of the powertrain. The driveline typically comprises a transmission arrangement, which in turn comprises at least one transmission unit. A transmission unit may for example be a single speed transmission unit (also known as a single reduction gear) or a multispeed transmission unit. A driveline may further comprise one or more shafts, for example a drive shaft. A driveline may also comprise other types of components, such as one or more joint devices (e.g. universal joints or constant velocity joints), a clutch, a differential, etc..

In the present disclosure, two or more powertrains are considered to be mechanically separated from each other when there is no possibility for directly transmitting torque between said powertrains and the powertrains are connected to different drive wheel(s) of the vehicle. In other words, two powertrains are mechanically separated when a power unit of one of the powertrains cannot transmit driving torque to the drive wheel(s) of the other powertrain and vice versa.

The present disclosure relates to a method for controlling a vehicle, said vehicle comprising at least two (i.e. two or more) mechanically separated powertrains. The herein described method for controlling a vehicle is performed by a control arrangement configured therefore. Furthermore, the herein described method is performed while the vehicle is in motion. More specifically, the method may suitably be performed while the vehicle is in motion with at least one powertrain of the two or more mechanically separated powertrains providing motive force to the vehicle. The method may however also be performed while the vehicle is in motion during coasting (also known as freewheeling), i.e. when no motive or braking force is provided to the vehicle by any one of the vehicle's powertrain as a result of the power unit(s) thereof being disconnected from the drive wheels.

The at least two mechanically separated powertrains of the vehicle comprises a first powertrain and one or more second powertrains. According to one alternative, the first powertrain and at least one of the one or more second powertrains are comprised in a common vehicle unit of the vehicle. This could for example be the case when the vehicle consists of a single vehicle unit, when the vehicle constitutes a vehicle combination where only a tractor vehicle unit comprises powertrains, or when the vehicle constitutes a vehicle combination comprising one vehicle unit comprising at least two of the mechanically separated powertrains and another vehicle unit comprising at least one of the one or more second powertrains. According to another alternative, the first powertrain is comprised in a first vehicle unit of the vehicle and the one or more second powertrains are comprised in a second vehicle unit of the vehicle. In such a case, the first powertrain could for example be comprised in a tractor vehicle unit whereas the one or more second powertrains could be comprised in a trailing vehicle unit, although the present disclosure is not limited thereto.

The first powertrain comprises one or more first power units configured to provide force (either motive or braking force, depending on the driving situation) to one or more first drive wheels of the vehicle. The first powertrain may further comprise a first transmission arrangement configured to transmit power, suitably at different gear ratios, from the one or more first power units to the one or more first drive wheels. In many cases, vehicle powertrains comprises at least two drive wheels, said drive wheels being evenly distributed on opposing sides of the vehicle. In such cases, the first powertrain may be described as comprising one or more first power units configured to provide force to a first set of drive wheels. Although the present disclosure is not limited thereto, the first powertrain may for example be comprised in vehicle consisting of a single vehicle unit, or be comprise in a tractor vehicle unit of a vehicle comprising a plurality of vehicle units.

Furthermore, each second powertrain comprises one or more second power units configured to provide force (either motive or braking force, depending on the driving situation) to one or more second drive wheels of the vehicle. Each second powertrain may further comprise a second transmission arrangement configured to transmit power, suitably at different gear ratios, from the one or more second power units of said powertrain to the one or more second drive wheels. As previously mentioned, vehicle powertrains may often comprise a plurality of drive wheels. In such cases, each second powertrain may be described as comprising one or more second power units configured to provide force to a second set of drive wheels.

In case the vehicle comprises more than one of the above-mentioned second powertrains, the second powertrains may have different configurations or may have the same configurations. Moreover, in view of the second powertrains being mechanically separated from each other, each second powertrain is configured to provide force to one or more second drive wheels which are different from the one or more second drive wheels of each one of the other second powertrains.

The vehicle further comprises a power take-off configured to be powered by the first powertrain. Said power take-off may be selectively connected to the first powertrain. The power take-off is in turn configured to transfer power to an auxiliary power consumer, which in turn may be performed in accordance with any previously known technique therefore. It should here be noted that the vehicle may comprise more than one power take-off. In such cases, the different power take-offs may be configured to be powered by the same powertrain, or by different powertrains, of the vehicle. Thus, for the purpose of the present disclosure, the first powertrain should be considered to constitute the powertrain, of the mechanically separated powertrains, which is associated with the power take-off for which there may be a need or desire for power supply.

The herein described method comprises a step of, while the vehicle is in motion and the one or more first power units of the first powertrain are disconnected from the one or more first drive wheels, controlling the first powertrain so as to power the power take-off. Suitably, the first powertrain may be controlled to deliver an amount of power to the power take-off which is sufficient to meet a power demand of the power take-off. As previously mentioned, the step of controlling the first powertrain to power the power take-off is performed while the one or more power units are disconnected from the one or more first drive wheels. The one or more first power units may for example be disconnected from the one or more first drive wheels as a result of a transmission arrangement (i.e. the first transmission arrangement) of the first powertrain being in neutral and/or the one or more first power units being disconnected from a driveline of the first powertrain. When the one or more first power units are disconnected from the one or more first drive wheels, the first powertrain cannot provide any motive force to the vehicle. Therefore, the method further comprises a step of controlling the one or more second powertrains to meet a total motive force demand of the vehicle, said step being performed simultaneously with the above described step of controlling the first powertrain to power the power take-off while the vehicle is in motion and the one or more first power units are disconnected from the one or more first drive wheels.

The herein method may further comprise a step of, in response to a request for powering of the power take-off while the first powertrain provides motive force to the vehicle, redistributing the motive force provided by the first powertrain to the vehicle so as to be provided by to the one or more second powertrains, and thereafter controlling the one or more second powertrains to meet a total motive force demand of the vehicle. Thereby, the first powertrain ceases to provide motive force to the vehicle. However, the motive force provided by the one or more second powertrains is simultaneously increased such that the total motive force demand of the vehicle is met. When the first powertrain no longer provides any motive force to the vehicle (as a result of the redistribution of force), the one or more first power units may be disconnected from the one or more first drive wheels. Such a disconnection may for example be made by putting a transmission arrangement of the first powertrain in neutral, and/or disconnecting the one or more first power units from a driveline of the first powertrain. When the one or more first power units are disconnected from the one or more first drive wheels, the speed of the one or more first power units may be controlled so as to allow connection of the power take-off to the first powertrain. This could alternatively be described as controlling the first powertrain to allow connection of the power take-off thereto. Thereafter, the power take-off may be connected to the first powertrain. When the power take-off is connected to the first powertrain, the first powertrain may be controlled so as to power the power take-off. As already described above, the first powertrain may suitably be controlled so as to deliver power to the power take-off sufficient to meet a power demand of the power take-off.

In some cases, a power demand of the power take-off may cease while the vehicle is in motion. In such cases, it may be desirous to disconnect the power take-off from the first powertrain, e.g., to avoid risking damage of the power take-off or an auxiliary power consumer connected thereto and/or reduce energy losses of the vehicle. Therefore, the method may further comprise a step of, in response to a request for disconnection of the power take-off from the first powertrain while the vehicle is in motion, controlling a torque of the one or more first power units to allow disconnection of the power take-off from the first powertrain and thereafter disconnecting the power take-off from the first powertrain. When the power take-off is disconnected from the first powertrain, the method may optionally comprise connecting at least one of the one or more first power units to the one or more drive wheels. Thereafter, the first powertrain may be controlled to provide motive power to the vehicle, either alone or in combination with at least one of the one or more second powertrains, if desired.

Furthermore, it may in some cases be desirable to be able to use the first powertrain, alone or in combination with at least one of the one or more second powertrains, for the purpose of providing motive force to the vehicle despite it being used for powering the power take-off. Therefore, the herein described method may further comprise a step of, when the power take-off is powered by the first powertrain and the one or more first power units are disconnected from the one or more drive wheels while the vehicle is in motion, controlling the first powertrain to connect at least one of the one or more first power units to the one or more first drive wheels while powering the power take-off. Thereafter, the method may comprise a step of controlling the first powertrain and the one or more second powertrains to achieve a targeted force distribution therebetween to meet a total motive force demand of the vehicle while powering the power take-off using the first powertrain. The targeted force distribution may for example be a force distribution enabling a more energy efficient operation of the vehicle and/or achieving another desirable effect, e.g., reduced risk of wear or damage of constituent components of powertrains.

Moreover, in some situations, the power which is deliverable by the first powertrain may be insufficient to meet a power demand of the power take-off. In view of the first powertrain and the one or more second powertrains being mechanically separated from each other, there is no possibility to directly transferring power from any one of the second powertrains to the first powertrain for the purpose of being able to meet the power demand of the power take-off. However, power may be transferred between the powertrains via the ground and the drive wheels. Thus, the herein described method may comprise, when a power demand of the power take-off is higher than a power deliverable to the power take-off by the first powertrain, controlling the first powertrain to connect at least one of the one or more first power units to the one or more first drive wheel (unless already connected). Thereafter, the method may comprise increasing the motive power delivered by the one or more second powertrains for the purpose of meeting both the total motive force demand and the power demand of the power take-off. When at least one of the one or more first power units are connected to the one or more first drive wheels, power may be transferred from the one or more second powertrains, via the ground on which the vehicle travels, to the first powertrain. This may in turn increase the power that the first powertrain may deliver to the power take-off, such that the power demand of the power take-off may be met.

The herein described method may for example be initiated when the vehicle is set into motion from standstill, irrespectively of whether the power take-off is connected or disconnected to the first powertrain and whether (at least one of) the one or more first power units are connected or disconnected to the one or more first drive wheels. It may often be desirable to be able to use all of the powertrains of the vehicle when the vehicle is to be set into motion from standstill e.g., for traction reasons. Therefore, at least one of the one or more first power units may suitably be connected to the one or more first drive wheels when the vehicle is set into motion from standstill.

The herein described method may alternatively be initiated at a point in time at which the vehicle is in motion. At the initiation of the herein described method, the power take-off may or may not be connected to the first powertrain and (at least one of) the one or more first power units may or may not be connected to the one or more first drive wheels.

The performance of the herein described method for controlling a vehicle may be governed by programmed instructions. These programmed instructions may take the form of a computer program which, when executed by a computer, cause the computer to effect desired forms of control action. Such a computer may for example be comprised in the control arrangement as described herein. A computer is in the present disclosure considered to mean any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner.

The above described programmed instructions, which may take the form of a computer program, may be stored on a computer-readable medium. Hence, the present disclosure also relates to a computer-readable medium storing instructions, which when executed by computer, cause the computer to carry out the herein described method for controlling a vehicle. The computer-readable medium may be a non-transitory computer-readable medium, such as a tangible electronic, magnetic, optical, infrared, electromagnetic, and/or semiconductor system, apparatus, and/or device.

The present disclosure further relates to a control arrangement configured to control a vehicle. The control arrangement may be configured to perform any one of the steps of the herein described method for controlling a vehicle.

More specifically, in accordance with the present disclosure, a control arrangement configured to control a vehicle is provided. The vehicle comprises at least two mechanically separated powertrains including a first powertrain and one or more second powertrains. The first powertrain comprises one or more first power units configured to provide force to one or more first drive wheels of the vehicle. Each second powertrain comprises comprising one or more second power units configured to provide force to one or more second drive wheels of the vehicle. The vehicle further comprises a power take-off configured to be powered by the first powertrain. The control arrangement is configured to, while the vehicle is in motion and the one or more first power units are disconnected from the one or more first drive wheels, control the first powertrain to power the power take-off, and simultaneously control the one or more second powertrains to meet a total motive force demand of the vehicle.

The control arrangement may comprise one or more control units. In case of the control arrangement comprising a plurality of control units, each control unit may be configured to control a certain function/step or a certain function/step may be divided between more than one control units. The control arrangement may be a control arrangement of a control system configured to control the at least two mechanically separated powertrains of the vehicle. Alternatively, the control arrangement may be any other control arrangement of the vehicle, but configured to communicate with the powertrains of the vehicle for the purpose of performing the herein described method.

The present disclosure further relates to a vehicle comprising at least two mechanically separated powertrains, said at least two mechanically separated powertrains comprising a first powertrain and one or more second powertrains. The vehicle also comprises at least one power take-off configured to be powered by the first powertrain. The vehicle further comprises control arrangement as described herein. The vehicle may consist of a single vehicle unit, or comprise at least two vehicle units. The vehicle may for example be a heavy-duty vehicle, but is not limited thereto. Moreover, the vehicle may be a fully electric vehicle (such as a battery electric vehicle), a hybrid vehicle, a fuel cell vehicle, or even a vehicle driven solely by combustion engines. Moreover, the vehicle may be a vehicle configured to be driven by a driver, either in part or in full. Such a driver may be present onboard the vehicle, or be present remote from the vehicle (such as at a remote control center, or the like). Alternatively, the vehicle may be a fully autonomous vehicle.

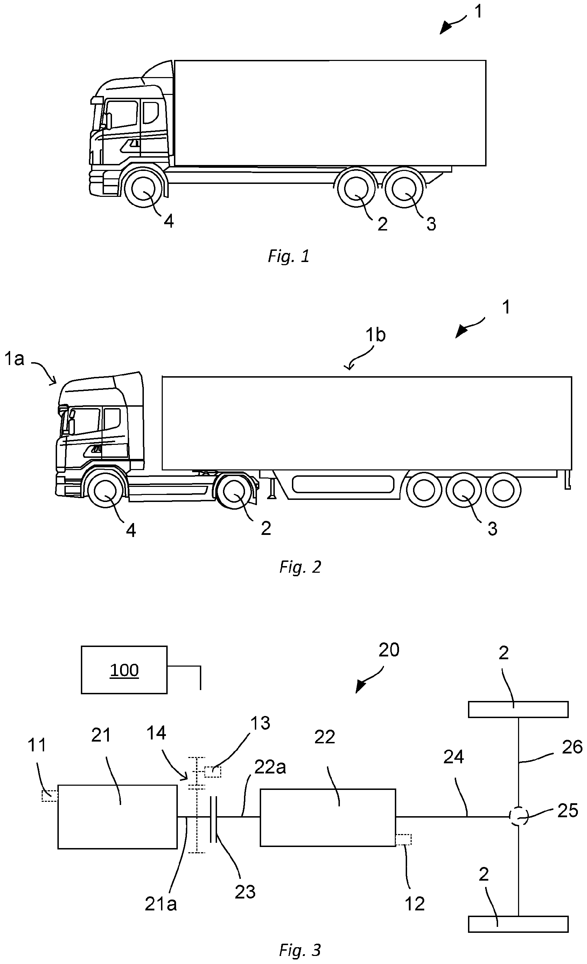

Figure 1 illustrates a side view of a first example of a vehicle 1. The vehicle 1 is here illustrated as a rigid truck, and thus constitutes an example of a vehicle consisting of a single vehicle unit. The vehicle 1 comprises one or more first drive wheels 2 configured to be driven by a first powertrain (not shown) of the vehicle. In case of the vehicle 1 comprising a plurality of first drive wheels 2, these are typically evenly distributed on opposing sides of the vehicle 1, which is also the reason for only one first drive wheel 2 being visible in the figure. The vehicle 1 may optionally further comprise one or more second drive wheels 3 configured to be driven by a second powertrain (not shown) of the vehicle, said second powertrain being separate from the first powertrain. In case the vehicle 1 comprises a plurality of second drive wheels 3, these are typically evenly distributed on opposing sides of the vehicle 1. The vehicle 1 further comprises front wheels 4. The front wheels 4 may often be non-driven wheels but could alternatively be drive wheels.

Figure 2 illustrates a side view of a second example of a vehicle 1. The vehicle 1 is here illustrated as a semi-trailer truck, and is thus an example of a vehicle constituting a vehicle combination comprising at least two vehicle units. More specifically, the exemplified vehicle 1 comprises a first vehicle unit 1a in the form of a tractor vehicle (illustrated as a tractor truck) and a second vehicle unit 1b in the form of a trailing vehicle (illustrated as a semi-trailer). Like the vehicle 1 shown in Figure 1, the first vehicle unit 1a comprises one or more first drive wheels 2 configured to be driven by a first powertrain of the vehicle. The first powertrain of the vehicle 1 may be a powertrain of the first vehicle unit 1a. The first vehicle unit further comprises front wheels 4, which may be non-driven wheels or drive wheels. The vehicle further comprises one or more second drive wheels 3 configured to be driven by a second powertrain of the vehicle. In the illustrated case, the one or more second drive wheels 3 are part of the second vehicle unit 1b. Thus, the exemplified vehicle 1 comprises a second powertrain comprised in the second vehicle unit 1b.

Figure 3 schematically illustrates an example of a powertrain 20 of a vehicle, such as the vehicle 1 shown in either one of Figures 1 and 2. The exemplified powertrain 20 may for example constitute a first powertrain of a vehicle in case the vehicle 1 comprises at least two mechanically separated powertrains. The powertrain 20 may be configured to provide force (either motive or braking force, depending on the driving situation) to a set of first drive wheels 2. Said first drive wheels 2 are comprised in the powertrain 20.

The powertrain 20 comprises at least one first power unit 21, such as a combustion engine. Although not illustrated in the figure, the exemplified powertrain 20 may comprise more than one first power units 21. For example, the powertrain 20 may in addition to a combustion engine comprise one or more electrical machines, each configured to serve as a (first) power unit. The exemplified powertrain 20 further comprises a transmission arrangement 22. The transmission arrangement 22 may for example comprise, or consist of, an automated manual transmission, but is not limited thereto. The first power unit 21 of the exemplified powertrain 20 comprises an output shaft 21a connectable to an input shaft 22a of the transmission arrangement 22 via a clutch 23. An output shaft 24 of the transmission arrangement 22 may be connected to a drive shaft 26, with its associated drive wheels 2, typically via a differential 25.

One or more power take-offs may be connectable to the vehicle powertrain 20. For example, a first power take-off 11 may be connected to a shaft (other than the output shaft 21a) of the first power unit 21. A second power take-off 12 may be connected to a shaft of the transmission arrangement 22, for example a lay shaft (not shown) of the transmission arrangement. A third power take-off 13 may be connected to the output shaft 21a of the first power unit 21 via a gearwheel arrangement 14.

The exemplified powertrain 20 may be controlled by a control arrangement 100 configured therefore. Said control arrangement 100 may be configured to perform the herein described method for controlling a vehicle.

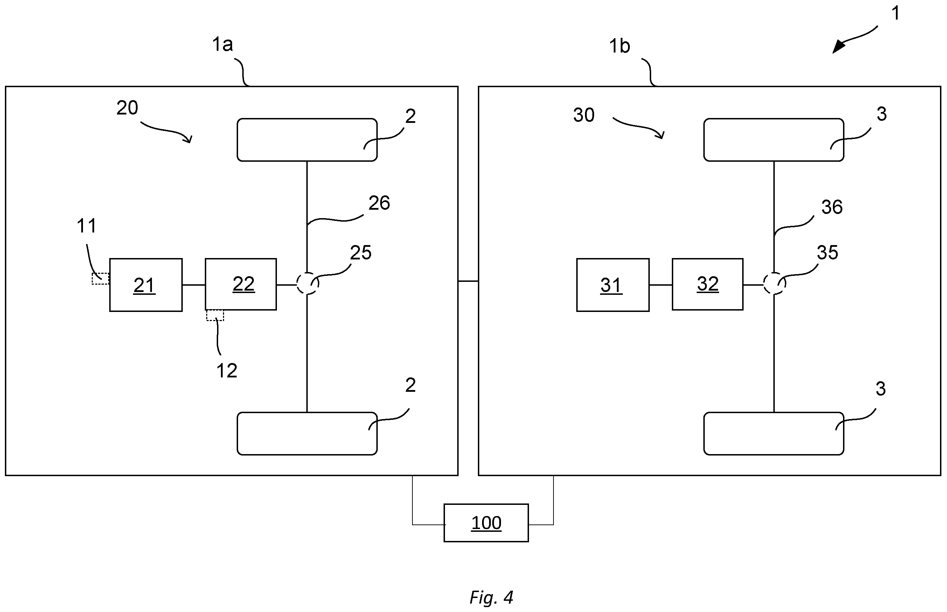

Figure 4 schematically illustrates an exemplifying embodiment of a vehicle 1 comprising a first powertrain 20 and a second powertrain 30 that are mechanically separated from each other. The vehicle 1 is in the figure shown as a vehicle combination comprising a first vehicle unit 1a and a second vehicle unit 1b, and may thus for example correspond to the vehicle shown in Figure 2.

As shown in the figure, the first powertrain 20 of the vehicle 1 may be arranged in the first vehicle unit 1a whereas the second powertrain 30 may be arranged in the second vehicle unit 1b of the vehicle 1. It should however be noted that the first and second vehicle powertrains 20, 30 may alternatively be arranged in a common vehicle unit, for example in case the vehicle 1 would consist of a single vehicle unit (such as shown in Figure 1). Furthermore, any one of the vehicle units 1a, 1b may comprise more powertrains than illustrated in the figure, if desired.

The first powertrain 20 comprises at least one first power unit 21, such as an electrical machine, configured to provide force to a plurality of first drive wheels 2 of the vehicle 1. The first power unit 21 is connected to a first transmission arrangement 22 of the first powertrain 20. The transmission arrangement 22 is in turn connected to, optionally via a first differential 25, a first drive shaft 26. The first drive shaft 26 is in turn connected to the first drive wheels 2. The first drive shaft 26 and the first differential 25, if present, as well as the first drive wheels 2 are comprised in the first powertrain 20. The first powertrain 20 shown in Figure 4 may for example constitute an electric drive axle, also known as an E-axle. Alternatively, the first powertrain 20 may have the same configuration as the exemplified powertrain shown in Figure 3.

The vehicle 1 may further comprise one or more power take-offs connectable to the first powertrain 20. For example, a first power take-off 11 may be connected to a shaft of the first power unit 21. Alternatively, or additionally, a second power take-off 12 may be connected to a shaft of the transmission arrangement 22.

The second powertrain 30 comprises at least one second power unit 31 configured to provide force to a plurality of second drive wheels 3 of the vehicle 1. The second power unit 31 is connected to a second transmission arrangement 32, which in turn is connected to, optionally via a differential 35, to a second drive shaft 36. The second drive shaft 36 is in turn connected to the second drive wheels 3. The second transmission arrangement 32, the second drive shaft 36, the second differential 35 (if present), and the third drive wheels 3 are comprised in the second powertrain 30.

Although not illustrated in the figure, the vehicle 1 may comprise one or more additional power take-offs connectable to the second powertrain 30, if desired.

As shown in the figure, the vehicle 1 may further comprise a control arrangement 100. The control arrangement may be configured to control both the first powertrain 20 and the second powertrain 30 for the purpose of performing the herein described method for controlling a vehicle.

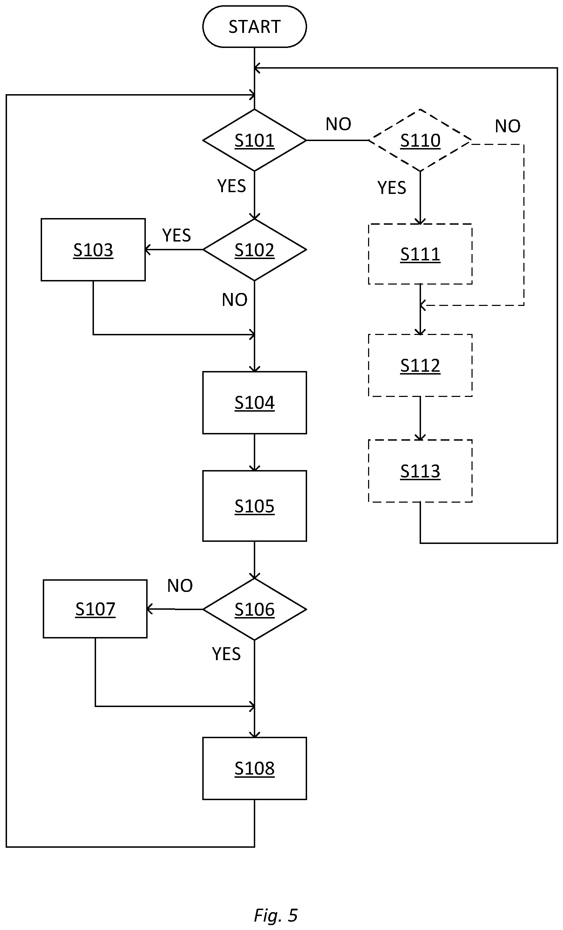

Figure 5 represents a flowchart schematically illustrating a first exemplifying embodiment of the herein described method for controlling a vehicle. As previously mentioned, the vehicle comprises at least two mechanically separated powertrains including a first powertrain and one or more second powertrains. The vehicle further comprises a power take-off configured to be powered by the first powertrain. The method according to the first exemplifying embodiment is performed while the vehicle is in motion. Optional steps of the exemplifying embodiment are illustrated in dashed lines.

The method according to the first exemplifying embodiment comprises a step S101 of determining whether there is a request for powering of the power take-off. In case there is a request for powering of the power take-off, the method proceeds to a step S102 of determining whether the first powertrain currently is providing motive force to the vehicle.

In case it is determined in step S102 that the first powertrain is providing motive force to the vehicle, the method proceeds to a step S103 of redistributing the motive force provided by the first powertrain to the one or more second powertrains. In other words, step S103 comprises redistributing the motive force provided by the first powertrain to the vehicle so as to instead be provided to the vehicle by one or more of the one or more second powertrains. This in turn means that the first powertrain is controlled so as to not provide any motive force to the vehicle, whereas at least one of the one or more second powertrains is controlled so as to increase the motive force provided therefrom to the vehicle, thereby compensating for the resulting loss of motive force resulting from interruption of motive force from the first powertrain.

After step S103, the method proceeds to a step S104 of controlling the one or more second powertrains to meet a total motive force demand of the vehicle. In case the vehicle comprises only one of said second powertrains, said step comprises controlling said second powertrain to provide the motive force needed to meet the total motive force demand. However, in case the vehicle comprises a plurality of second powertrains, the step may comprise distributing the motive force provided between the plurality of second powertrains to meet the total motive force demand of the vehicle. Such a distribution of the force provided by the plurality of second powertrains may for example be selected based on achieving the most energy efficient operation of the vehicle, although other factors may additionally or alternatively be considered.

In case it is determined in step S102 that the first powertrain is not providing any motive force to the vehicle, step S103 may naturally be omitted, and the method may proceed directly to step S104 as shown in the figure.

The method according to the exemplifying embodiment further comprises a step S105 of disconnecting the one or more first power units of the first powertrain from the one or more first drive wheels of the vehicle, unless already disconnected.

The method according to the first exemplifying embodiment further comprises a step S106 of determining whether the power take-off is connected to the first powertrain. It should be noted that although steps S104, S105 and S106 are illustrated in the figure to be performed in a specific order, the present disclosure is not limited thereto. For example, the steps S104, S105 and S106 may be performed essentially in parallel, or in any order, without departing from the present disclosure.

In case it is determined in step S106 that the power take-off is not currently connected to the first powertrain, the method proceeds to a step S107 of controlling the speed of the one or more first power units to allow connection of the power take-off to the first powertrain and thereafter connecting the power take-off to the first powertrain. After step S107, the method proceeds to a step S108 of controlling the first powertrain to power the power take-off. Step S108 is performed while the one or more second powertrains are controlled so as to meet the total motive force demand of the vehicle (see step S104).

In case it is determined in step S106 that the power take-off is already connected to the first powertrain, step S107 may be omitted and the method proceed directly to step S108.

After step S108, the method according to the first exemplifying embodiment is reverted to start as shown in the figure.

In case it is determined in step S101 that there is no request for powering of the power take-off, the method may proceed to a step S110 of determining whether the power take-off is connected to the first powertrain and a request for disconnecting the power take-off from the first powertrain has been generated. Such a request may for example have been generated in case the need for powering the power take-off has ceased and it may be desirable to disconnect the power take-off from the first powertrain to reduce energy losses.

In case the first power take-off is connected to the first powertrain and a request for disconnecting the power take-off from the first powertrain has been generated, the method may proceed to a step S111 of controlling a torque of the one or more first power units to allow disconnection of the power take-off from the first powertrain and thereafter disconnecting the power take-off from the first powertrain.

After step S111, the method may comprise a step S112 of connecting at least one of the one or more first power units of the first powertrain to the one or more first drive wheels, unless already connected. This may be performed through controlling a speed of said at least one of the one or more first power units to allow connecting said first power unit to the one or more first drive wheels.

However, in case it is determined in step S110 that the power take-off is not connected to the first powertrain or that no request for disconnection of the power take-off from the first powertrain has been generated, the method may proceed directly to step S112.

The step S112 may be followed by a step S113 of controlling the first powertrain and the one or more second powertrains to meet a total motive force demand. The step S113 may comprise controlling the distribution of force between the first powertrain and each of the one or more second powertrains to meet the total motive force demand of the vehicle. Such a distribution of the force provided by the different powertrains may for example be selected based on achieving the most energy efficient operation of the vehicle, although other factors may additionally or alternatively be considered.

After step S113, the method may be reverted to start as shown in the figure.

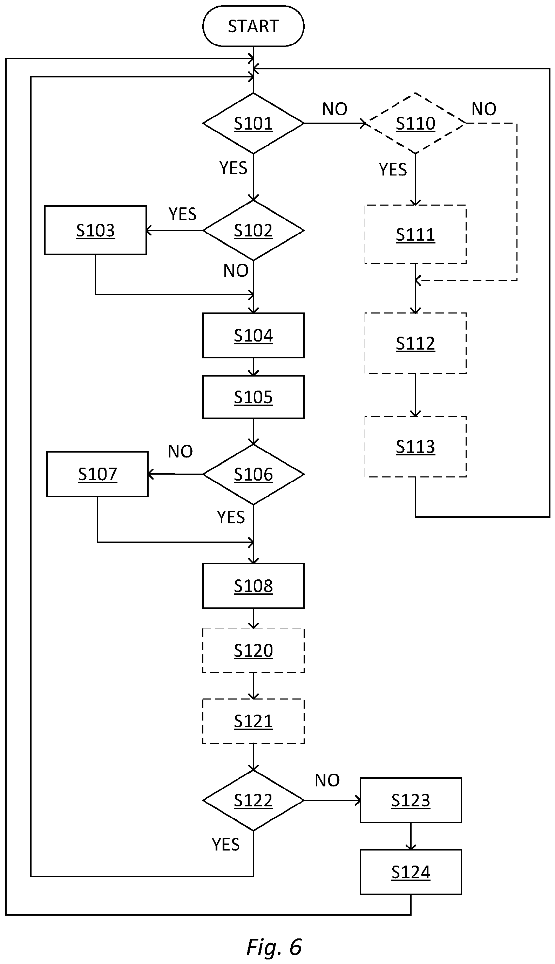

Figure 6 represents a flowchart schematically illustrating a second exemplifying embodiment of the herein described method for controlling a vehicle. Optional steps of the exemplifying embodiment are illustrated in dashed lines.

The second exemplifying embodiment of the herein described method corresponds to the first exemplifying embodiment (described above with reference to Figure 5), except that it further comprises step S122 and, when applicable, the steps S123 and S124. Steps S122, S123 and S124 are described below. The second exemplifying embodiment of the herein described method may further comprise the optional steps S120 and S121 described below.

The optional step S120 is, if present, performed after step S108. Step S120 comprises controlling the first powertrain to connect at least one of the one or more first power units to the one or more first drive wheels. This is performed while the first powertrain is powering the power take-off. Controlling the first powertrain to connect at least one first power unit to the one or more first drive wheels may for example comprise controlling a speed of said at least one first power unit to allow connecting it to the one or more drive wheels.

When the method comprises step S120, the method may thereafter further comprise a step S121 of controlling the first powertrain and the one or more second powertrains to achieve a targeted force distribution therebetween to meet the total motive force demand of the vehicle while powering the power take-off using the first powertrain.

The method according to the second exemplifying embodiment further comprises a step S122 of determining whether the power deliverable by the first powertrain to the power take-off is sufficient to meet a power demand of the power take-off. In case the power demand of the power take-off is equal to or lower than the power deliverable to the power take-off by the first powertrain, the method is reverted to start.

However, in case it is determined in step S122 that the power demand of the power take-off is higher than the power deliverable to the power take-off by the first powertrain, the method proceeds to a step S123 of controlling the first powertrain to connect at least one of the one or more first power units of the first powertrain to the one or more first drive wheels, unless already connected.

After step S123, the method comprises a step S124 of increasing the motive power delivered by the one or more second powertrains to meet the total motive force demand of the vehicle as well as the power demand of the power take-off. More specifically, the power demand of the power take-off is met through transfer of power, from the one or more second powertrains, to the first powertrain via the ground on which the vehicle travels. Therefore, the one or more second powertrains are controlled to deliver more power to the one or more second drive wheels than actually necessary to only meet the total motive force demand of the vehicle, the excess power being transmitted, via the ground, to the one or more first drive wheels and thereby also the first powertrain for the purpose of powering the power take-off.

After step S124, the method is reverted to start.

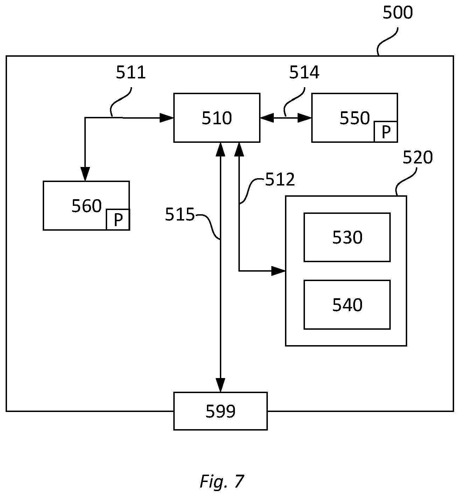

Figure 7 schematically illustrates an exemplifying embodiment of a device 500. The control arrangement 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for controlling a vehicle. Said vehicle comprises at least two mechanically separated powertrains including a first powertrain and one or more second powertrains. The first powertrain comprises one or more first power units configured to provide force to one or more first drive wheels of the vehicle. Each of the second powertrains comprises one or more second power units configured to provide force to one or more second drive wheels of the vehicle. The vehicle further comprises a power take-off configured to be powered by the first powertrain. The computer program comprises instructions for, while the vehicle is in motion and the one or more first power units are disconnected from the one or more first drive wheels, controlling the first powertrain to power the power take-off and controlling the one or more second powertrains to meet a total motive force demand of the vehicle.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

## Claims

1. A method, performed by a control arrangement (100), for controlling a vehicle (1),
said vehicle (1) comprising at least two mechanically separated powertrains (20, 30) including:
(i) a first powertrain (20) comprising one or more first power units (21) configured to provide force to one or more first drive wheels (2) of the vehicle (1), and
(ii) one or more second powertrains (30), each second powertrain (30) comprising one or more second power units (31) configured to provide force to one or more second drive wheels (3) of the vehicle (1),
the vehicle further comprising a power take-off (11, 12, 13) configured to be powered by the first powertrain (20),
the method comprising, while the vehicle is in motion and the one or more first power units (21) are disconnected from the one or more first drive wheels (2), the following steps:
controlling (S108) the first powertrain (20) to power the power take-off (11, 12, 13), and
controlling (S104) the one or more second powertrains to meet a total motive force demand of the vehicle.

2. The method according to claim 1, further comprising the following steps:
in response to a request for powering of the power take-off (11, 12, 13) while the first powertrain (20) provides motive force to the vehicle (1) , redistributing (S103) the motive force provided by the first powertrain (20) to be provided by the one or more second powertrains (30) , and controlling (S104) the one or more second powertrains (30) to meet a total motive force demand of the vehicle (1) ,
when no motive force is provided by the first powertrain (20), disconnecting (S105) the one or more first power units (21) from the one or more first drive wheels (2),
when the one or more first power units (21) are disconnected from the one or more first drive wheels (2), controlling (S107) a speed of the one or more first power units (21) to allow connection of the power take-off (11, 12, 13) to the first powertrain (20) and thereafter connecting the power take-off (11, 12, 13) to the first powertrain (20), and
thereafter controlling (S108) the first powertrain (20) to power the power take-off (11, 12, 13).

3. The method according to any one of claims 1 or 2, further comprising the following steps:
in response to a request for disconnection of the power take-off (11, 12, 13) from the first powertrain (20) while the vehicle (1) is in motion, controlling (S111) a torque of the one or more first power units (21) to allow disconnection of the power take-off (11, 12, 13) from the first powertrain (20) and thereafter disconnecting the power take-off (11, 12, 13) from the first powertrain (20), and
optionally connecting (S112) at least one of the one or more first power units (21) to the one or more first drive wheels (2) when the power take-off (11, 12, 13) is disconnected from the first powertrain (20).

4. The method according to any one of the preceding claims, further comprising the following steps:
when the power take-off (11, 12, 13) is powered by the first powertrain (20) and the one or more first power units (21) are disconnected from the one or more first drive wheels (2) while the vehicle (1) is in motion, controlling (S120) the first powertrain (20) to connect at least one of the one or more first power units (21) to the one or more first drive wheels (2) while powering the power take-off (11, 12, 13), and
thereafter controlling (S121) the first powertrain (20) and the one or more second powertrains (30) to achieve a targeted force distribution therebetween to meet a total motive force demand of the vehicle (1) while powering the power take-off (11, 12, 13) using the first powertrain (20).

5. The method according to any one of the preceding claims, wherein the method further comprises:
when a power demand of the power take-off (11, 12, 13) is higher than a power deliverable to the power take-off (11, 12, 13) by the first powertrain (20), controlling (S123) the first powertrain (20) to connect at least one of the one or more first power units (21) to the one or more first drive wheels (2), unless already connected, and
thereafter increasing (S124) the motive power delivered by the one or more second powertrains (30) to meet the total motive force demand of the vehicle (1) and, through transfer of power to the first powertrain (20) via the ground on which the vehicle (1) travels, the power demand of the power take-off (11, 12, 13).

6. A computer program comprising instructions which, when executed by a computer, cause the computer to carry out the method according to any one of the preceding claims.

7. A computer-readable medium comprising instructions which, when executed by a computer, cause the computer to carry out the method according to any one of claims 1 to 5.

8. A control arrangement (100) configured to control a vehicle (1),
said vehicle (1) comprising at least two mechanically separated powertrains including:
(i) a first powertrain (20) comprising one or more first power units (21) configured to provide force to one or more first drive wheels (2) of the vehicle (1), and
(ii) one or more second powertrains (30) , each second powertrain (30) comprising one or more second power units (31) configured to provide force to one or more second drive wheels (3) of the vehicle (1),
the vehicle (1) further comprising a power take-off (11, 12, 13) configured to be powered by the first powertrain (20),
the control arrangement (100) being configured to, while the vehicle (1) is in motion and the one or more first power units (21) are disconnected from the one or more first drive wheels (2):
control the first powertrain (20) to power the power take-off (11, 12, 13), and control the one or more second powertrains (30) to meet a total motive force demand of the vehicle (1).

9. The control arrangement (100) according to claim 8, wherein the control arrangement (100) further is configured to:
in response to a request for powering of the power take-off (11, 12, 13) while the first powertrain (20) provides motive force to the vehicle (1), redistribute the motive force provided by the first powertrain (20) to be provided by the one or more second powertrains (30) and controlling the one or more second powertrains (30) to meet a total motive force demand of the vehicle (1),
when no motive force is provided by the first powertrain (20), disconnect the one or more first power units (21) from the one or more first drive wheels (2),
when the one or more first power units (21) are disconnected from the one or more first drive wheels (2), control a speed of the one or more first power units (21) to allow connection of the power take-off (11, 12, 13) to the first powertrain (20) and thereafter connect the power take-off (11, 12, 13) to the first powertrain (20), and
thereafter control the first powertrain (20) to power the power take-off (11, 12, 13).

10. The control arrangement (100) according to any one of claims 8 and 9, wherein the control arrangement (100) further is configured to:
in response to a request for disconnection of the power take-off (11, 12, 13) from the first powertrain (20) while the vehicle (1) is in motion, control a torque of the one or more first power units (21) to allow disconnection of the power take-off (11, 12, 13) from the first powertrain (20) and thereafter disconnect the power take-off (11, 12, 13) from the first powertrain (20), and
optionally connect at least one of the one or more first power units (21) to the one or more first drive wheels (2) when the power take-off (11, 12, 13) is disconnected from the first powertrain (20).

11. The control arrangement (100) according to any one of claims 8 to 10, wherein the control arrangement (100) further is configured to:
when the power take-off is powered by the first powertrain (20) and the one or more first power units (21) are disconnected from the one or more drive wheels while the vehicle (1) is in motion, control the first powertrain (20) to connect at least one of the one or more first power units (21) to the one or more first drive wheels (2) while powering the power take-off (11, 12, 13), and
thereafter control the first powertrain (20) and the one or more second powertrains (30) to achieve a targeted force distribution therebetween to meet a total motive force demand of the vehicle (1) while powering the power take-off (11, 12, 13) using the first powertrain (20).

12. The control arrangement (100) according to any one of claims 8 to 11, wherein the control arrangement (100) further is configured to:
when a power demand of the power take-off (11, 12, 13) is higher than a power deliverable to the power take-off (11, 12, 13) by the first powertrain (20), control the first powertrain (20) to connect at least one of the one or more first power units (21) to the one or more first drive wheels (2), unless already connected, and
thereafter increase the motive power delivered by the second powertrain (30) to meet the total motive force demand of the vehicle (1) and, through transfer of power to the first powertrain (20) via the ground on which the vehicle (1) travels, the power demand of the power take-off (11, 12, 13).

13. A vehicle (1) comprising at least two mechanically separated powertrains,
said at least two mechanically separated powertrains comprising:
(i) a first powertrain (20) comprising one or more first power units (21) configured to provide force to one or more first drive wheels (2) of the vehicle (1), and
(ii) a second powertrain (30) comprising one or more second power units (31) configured to provide force to one or more second drive wheels (3) of the vehicle (1),
the vehicle (1) further comprising:
a power take-off (11, 12, 13) configured to be powered by the first powertrain (20), and
a control arrangement (100) according to any one of claims 8 to 12.

14. The vehicle (1) according to claim 13, wherein the first powertrain (20) and the second powertrain (30) are comprised in a common vehicle unit of the vehicle (1).

15. The vehicle (1) according to claim 13, wherein the first powertrain (20) is comprised in a first vehicle unit (1a) of the vehicle, and the second powertrain (30) is comprised in a second vehicle unit (1b) of the vehicle (1).
